# EUROPEAN PATENT SPECIFICATION

(11) **EP 2 231 965 B1**
(45) Date of publication and mention of the grant of the patent: **25.05.2011**
(21) Application number: 08856399.4
(22) Date of filing: 05.12.2008
(51) Int. Cl.: E04H 3/12, E04F 11/104, B32B 15/08

(54) **STRUCTURAL MEMBER AND A STEPPED STRUCTURE**
STRUKTURELEMENT UND ABGESTUFTE STRUKTUR
ÉLÉMENT STRUCTUREL ET STRUCTURE ÉTAGÉE

(30) Priority: 05.12.2007 GB 0723813
(43) Date of publication of application: 29.09.2010
(73) Proprietor: Intelligent Engineering (Bahamas) Limited, Nassau (BS)
(72) Inventor: KENNEDY, Stephen, John, Ottawa, Ontario K17 0NT (CA)
(74) Representative: Jackson, Martin Peter
(86) International application number: PCT/GB2008/004040
(87) International publication number: WO 2009/071918

(56) References cited:
- WO-A-2005/001218
- GB-A- 2 368 041
- US-A- 5 357 724
- US-A1- 2006 150 540

## Description

The present invention relates to a structural member, particularly a structural member for use as part of a stepped structure such as a stepped riser, perhaps a seating riser e.g. for a sports stadium or other entertainment venue. A stepped structure can be formed from a plurality of the structural members.

To increase the revenue from sporting and other events, it is desirable to maximize the number of spectators that can be accommodated in a sports stadium or other venue. To do this it is necessary to provide additional tiers of seats, often resulting in structures in which a significant portion of the upper bowl seating cantilevers over other parts of the structure. Accordingly, the weight of risers supporting such seating should be minimized to reduce the size and cost of the supporting structure. To reduce transient and resonating vibrations associated with sporting and entertainment events the risers must be stiff, have sufficient mass, or be constructed with materials having good clamping characteristics. Existing designs of seating risers are made of prestressed or precast concrete or steel. Known riser sections are generally constructed from concrete as it allows for long clear spans between rakers (typically 12,200 mm) with reasonable vibration control since concrete has a damping coefficient of 0.2, good fire resistance and relatively low maintenance cost. The major disadvantage of concrete construction is that the riser section is heavy, e.g. about 10T for a two tier riser, with self weight (deadload) equal to the design superimposed live load due to use and occupancy. It is therefore necessary to provide heavier, stronger, stiffer and more costly superstructure and foundations to support the riser sections, especially for large cantilever seating sections.

To minimise self weight, and hence reduce the cost of the superstructure and foundations, the riser sections may be constructed with folded steel plates that are supported by intermediate rakers and a secondary steel framework. Typically the maximum span for this type of construction is approximately 6100mm and the self weight about 40% of an equivalent concrete structure. However, steel risers are more susceptible to sound and vibration problems, having a damping coefficient of 0.1, and have additional costs associated with the fabrication and erection of the intermediate rakers and secondary steel framework.

Structural sandwich plate members are described in US 5,778,813 and US 6,050,208, which documents are hereby incorporated by reference, and comprise outer metal, e.g. steel, plates bonded together with an intermediate elastomer core, e.g. of unfoamed polyurethane. These sandwich plate systems (often referred to as SPS structures) may be used in many forms of construction to replace stiffened steel plates, formed steel plates, reinforced concrete or composite steel-concrete structures and greatly simplify the resultant structures, improving strength and structural performance (e.g. stiffness, damping characteristics) while saving weight. Further developments of these structural sandwich plate members are described in WO 01/32414, also incorporated hereby by reference. As described therein, foam forms or inserts may be incorporated in the core layer to reduce weight and transverse metal shear plates may be added to improve stiffness.

According to the teachings of WO 01/32414 the foam forms can be either hollow or solid. Hollow forms generate a greater weight reduction and are therefore advantageous. The forms described in that document are not confined to being made of light weight foam material and can also be make of other materials such as wood or steel boxes, plastic extruded shapes and hollow plastic spheres. GB 2,368,041 discloses a stepped riser comprising a sandwich structure having upper and lower metal plates and an intermediate layer of plastics or polymer materials bonded to the metal plates so as to transfer shear forces therebetween i.e. a SPS structure. The plates are pre bent into the desired stepped riser shape and welded together and then the intermediate layer is injected into the stepped riser shaped cavity between the two plates. The sandwich structure plates used in forming the stepped riser have increased stiffness as compared to steel plates of comparable thickness and avoid or reduce the need to provide stiffening elements. This results in a considerably simpler structure with fewer welds leading to both simplified manufacture and a reduction in the area vulnerable to fatigue or corrosion. However, the structure into which the elastomer is injected is bulky and complicated to assemble.

US 5,357,724 discloses a stair tread, in which synthetic rubber is used to encase metal side core portions arranged at the side edges of a substantially horizontal core section at a downward right-angle thereto. A lip is provided along the side edges of the tread surface. The lip projects upward, the outside surface of the lip is flush with the surface of the synthetic rubber that covers the side core sections, and the lip is formed in one piece, of synthetic rubber.

One aim of the present invention is to provide an improved structural member.

The present invention provides a structural member comprising: a run portion formed by a sandwich structure having first and second plates and a core of a plastics or polymer material between and bonded to said first and second plates so as to transfer shear forces therebetween; and a rise portion formed by a metal member, said rise portion being fixed to said run portion and with a first portion of said metal member being inserted between said first and second plates, wherein said first portion has a thickness substantially equal to the separation of said plates such that by being inserted between said first and second plates said first portion spans the gap between the plates, and characterized by further comprising a further rise portion, said further rise portion being formed by a further metal member and being fixed to said run portion and with a first portion of said further metal member inserted between said first and second plates.

In this way the number of welds needed to manufacture a stepped riser with the sandwich plate system (SPS) is kept low and assembly is relatively easy. This not only reduces the cost of welding but also eliminates a potentially fatigue prone detail. Also, the present design thereby avoids greater potential for welding distortion. Furthermore, the structural element is relatively easily transportable and a plurality of structural elements can be stacked. Fixing together and fixing to a frame work is also simplified.

The materials, dimensions and general properties of the sheets of metal and core of polymer or plastics material of the invention may be chosen as desired for the particular use to which the stepped riser is to be put and in general may be as described in US-5,778,813 and US-6,050,208. Steel or stainless steel is commonly used in thicknesses of 0.5 to 20mm and aluminium may be used where light weight is desirable. Similarly, the plastics or polymer core is preferably compact (i.e. not foamed) and may be any suitable material, for example an elastomer such as polyurethane, as described in US-5,778,813 and US-6,050,208. Lightweight forms or inserts may also be included as described in WO 01/32414. The first sheet of metal may be painted or have a different surface treatment applied to improve traction.

A stepped structure according to the present invention can be designed to meet relevant serviceability criteria and construction constraints related to vibration and deflection control, and plate handling. The resulting structure is light, stiff and, with the plastics or polymer material's inherent dampening characteristics, provides improved structural and vibration response performance over risers built with stiffened steel plates and rolled sections (secondary steel work) or those built with prestressed concrete.

The present invention will be described further below with reference to the following description of an exemplary embodiment and the accompanying schematic drawings, in which:
Figure 1 is a perspective view of a structural element according to a first embodiment of the present invention;
Figures 2a and b are transverse cross-sectional views of a riser portion of the first embodiment of the present invention;
Figure 3 is a transverse cross-sectional view of a stepped structure according to the first embodiment of the present invention;
Figure 4 is a transverse cross-sectional view of a stepped structure according to a second embodiment of the present invention;
Figure 5 is a transverse cross-sectional view of a further stepped structure according to the second embodiment of the present invention;
Figure 6 is a transverse cross-sectional view of a further stepped structure according to the second embodiment of the present invention;
Figure 7 is a transverse cross-sectional view of a further stepped structure according to a third embodiment; and
Figures 8a and b are transverse cross-sectional views showing details of the third embodiment.

### First Embodiment

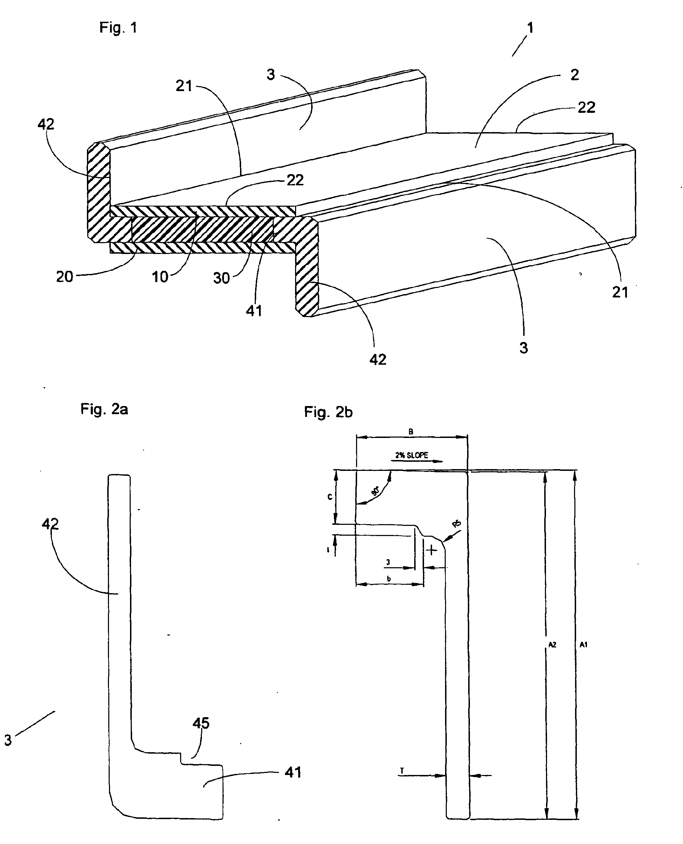

Figure 1 shows a perspective view of a structural member 1 according to the present invention. The structural member 1 can be used for forming a stepped structure 100, for example a seating riser for use in a theatre or sports stadium etc..

Typically a section of seating has a width of between 10 and 15 metres and is supported at each end by raker beams which can cantilever over other parts of the stadium. Seats are then placed on run portions 2 of the stepped structure. The run portions 2 are generally horizontal and steps between the run portions 2 are formed by rise portions 3 which are generally vertical. The stepped structure can be assembled on site or can be pre-assembled partially or completely.

As can be seen from Figure 1 in the structural element the step portion 2 (which is elongate in the longitudinal direction) is made of a first layer 10 and a second layer 20. The first and second layers 10, 20 are comprised of first and second metal plates, preferably steel plates though other materials may be suitable. For example, the plates 10, 20 may be made of a fibre reinforced plastic or be made of a metal other than steel, for example aluminium.

The thickness of the first and second layers 10, 20 may be, for example, in the range of from 0.5 to 20 mm. Parts of the structure expected to experience wear in use may be formed with thick metal layers and/or surface profiling, e.g. to improve grip. Alternatively coatings may be used.

Between the first and second layers 10, 20 is a core 30 of plastics or polymer material, preferably a compact thermosetting material such as polyurethane elastomer, so as to form a structural plate member (SPS) which acts as the run portion 2 or the tread of the structural member. The core 30 is formed of a material which transfers shear forces between the first and second layers 10, 20. The core may have a thickness in the range of from 15 to 300 mm and is bonded to the first and second layers 10, 20 with sufficient strength and has sufficient mechanical properties to transfer shear forces expected in use between those layers 10, 20. The bond strength between the core 30 and the layers 10, 20 should be greater than 3 MPa, preferably 6 MPa, and the modulus of elasticity of the core material should be greater than 200 MPa, preferably greater than 250 MPa, especially if expected to be exposed to high temperatures in use.

For low load applications, such as staircase risers, where the typical use and occupancy loads are of the order of 1.4kPa to 7.2kPa, the bond strength may be lower, e.g. approximately 0.5MPa. By virtue of the core layer 30, the structural sandwich plate member has a strength and load bearing capacity of a stiffened steel plate having a substantially greater plate thickness and significant additional stiffening.

To manufacture the structural member, the inner surfaces of layers 10, 20 are prepared, e.g. by acid etching and cleaning and/or grit blasting, so that the surfaces are sufficiently clean and smooth to form a good bond to the core material.

The core material is preferably injected into a cavity and then allowed to cure in the cavity. In order to manufacture the structural member 1 in this way, a cavity is formed between the layers 10, 20 by sealing longitudinal edges 21 of the structural plate member (as is described below) and transverse edges 22 of the structural plate member (for example by welding a face plate between the first and second layers 10, 20). Thus, a core cavity is formed between the first and second layers 10, 20 and core material can be injected into the core cavity by injection ports (not shown) either in the plates or the member attached at the transverse ends. Vent holes can be provided in any convenient position. Both vent holes and injection ports are preferably filled and ground flush after injection is completed. During injection and curing of the core material, the layers 10, 20 may need to be restrained to prevent buckling due to thermal expansion of the core caused by the heat of curing. Alternatively, especially for relatively small risers, the structural member may be put into a mould for injection of the core material. In fact, due to the geometry of the rise portion(s) 3 of the present invention and which are described below, buckling of the first and second layers 10, 20 during injection and curing of the core material is unlikely and this is a further advantage of the present invention.

Although not shown, spacers, light weight forms, shear plates and other inserts may be positioned in the core cavity before the first and second layers, 10, 20 are fixed in place. Spacers are advantageous because they ensure that the spacing of the sections, and hence the core thickness, is uniform across the riser. Furthermore, other low density bulking materials may be used in the core material such as micro spheres and these help in keeping the weight of the structural member low. Detailing, such as seat and safety rail mounts may be welded or otherwise fixed onto the structural member as desired before injection or after curing of the core. In the latter case however, care must be taken to avoid damage to the core.

As mentioned above, the longitudinal edges 21 of the core cavity are sealed by first longitudinal end portions 41 of rise portions 3. The rise portions 3 are formed by a metal member. Put another way, the longitudinal end portion 41 of the rise portion 3 is inserted between the first and second layers 10, 20. Preferably the rise portion 3 is in contact with, on a first side, the first layer 10 and on the second side, the second layer 20. Preferably the rise portion 3 is directly welded to the first and second layers 10, 20 but of course it will be possible to have a spacer element (not illustrated) positioned between the longitudinal end portion 41 of the rise portion 3 and the first layer 10 and/or the second layer 20. However, it is particularly convenient to use the longitudinal end portion 41 of the rise portion 3 to block the longitudinal gap between the first and second layers 10, 20 directly by itself.

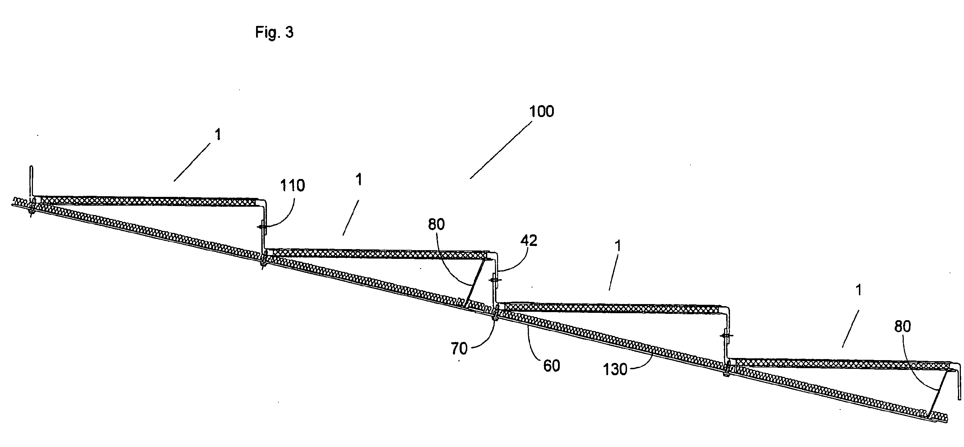

As can be seen in Figure 1, the rise portion 3 is made of an L-shaped element such that, in use, the longitudinal end portion 41 extends substantially horizontally so that it can be inserted between the first and second layers 10, 20. The rise portion 3 also comprises a vertical portion 42 which forms the vertical component of the L-shape and, in use, can be used (as is illustrated in Figure 3 and as will be described below) vertically to separate consecutive run portions 2.

As can be seen in Figure 1 each structural member preferably comprises two rise portions 3 (which are elongate in the longitudinal direction), one inserted between the first and second layers 10, 20 along a first longitudinal edge 21 and the second rise portion 3 inserted between the first and second layers 10, 20 along a second longitudinal edge 21 which second longitudinal edge is on an opposite side of the run portion 2 to the first longitudinal edge.

As is illustrated in Figure 1, the first and second rise portions are so orientated that the first rise portion 3 extends beyond an outer plane of the second layer 20 (preferably it is perpendicular to the outer plane of the second layer). The other rise portion 3 extends beyond the outer plane of the first layer 10 and again the part protruding protrudes in a generally perpendicular direction to the plane of the outer surface of the first layer 10. Thus, the two rise portions 3 extend in opposite directions from each other.

Preferably the rise portions 3 are formed of rolled metal (e.g. steel or aluminium). However, the rise portions 3 may be formed of non-metallic materials (though they are preferably steel) and also may be formed by other methods, such as bending a sheet of metal. However, preferably the rise portion is a rolled metal member and this can be particularly beneficial because certain features can be incorporated. These will be described with reference to Figure 2 which is a detailed transverse cross-sectional view of a rise portion 3.

As can be seen from Figure 2a, the rise portion 3 is generally L-shaped with the base of the L forming, at its end, the first longitudinal end portion 41. Preferably the longitudinal end portion 41 is thicker (preferably about 20 mm) than the vertical portion 42 of the rise portion 3 which need only be about 8 mm wide to provide enough strength to act as a riser.

Preferably the outer corner of the L-shape, where the base and the vertical part of the L-shape meet, has a radius of about 10 mm. This is because, in use, that radius will be exposed and sharp edges are to be avoided, if possible.

As can be seen, the base portion of the L at the first longitudinal end portion 41 comprises a step 45 on its inner surface. Preferably the step 45 is made as deep as the thickness of the first and/or second layer 20, as appropriate. This helps in assembly and the first and/or second layer 20 can then be placed into that step 45 (as illustrated in Figure 3) and welded in place. The outer surface of the second layer 20 is then substantially flush with the exposed surface of the base of the L-shaped rise portion. A similar step can be used on the outer surface of the base of the L-shaped rise portion (this is not illustrated).

Figure 2b illustrates a further rise portion 3 on which certain dimensions have been illustrated. Particular note is the 2% slope. That is, the first longitudinal end portion 41 is not at exactly 90° to the vertical portion 42. This ensures that the rise portions 2 slope outwardly allowing water, for example, to run off them. The below table shows typical dimensions for three types of rise portion. These dimensions are for a hot-rolled rise portion for use with run portions 2 which comprise first and second layers with a thickness of 4mm and a core 30 of 20mm thickness.

**Table 1**

| HOT ROLLED SHAPE SIZE | A1 | A2 | T | B | C | t | b |
|---|---|---|---|---|---|---|---|
| Type A | 125 | 126 | 8 | 40 | 20 | 4 | 23 |
| Type B | 215 | 216 | 10 | 40 | 20 | 4 | 23 |
| Type C | 305 | 306 | 12 | 40 | 20 | 4 | 23 |

The design of structural member illustrated in Figure 1 which is for use in a stepped structure is easy to assemble partly because the number of welds needed to form the structural member is kept low. For example, as can be seen from Figure 1, only four longitudinal welds are needed. These are between the first rise portion and the first layer, between the first rise portion and the second layer, between the second rise portion and the first layer and between the second rise portion and the second layer. As weld details can be prone to fatigue, the low number of welds necessary is a distinct advantage.

Also, only the rise portions need to be shaped and if this is done by rolling, great lengths of the rise portions can be easily manufactured. Thus, the amount of metal working/tooling needed is reduced. Preferably the length of rise and run portions are substantially equal so that no transverse joins are necessary.

Furthermore, structural members 1 such as those illustrated in Figure 1 can be assembled off site and, as illustrated in Figure 3 can then be put together to form a stepped structure 100 on site. This has particular advantages including (but not limited to) quality control in the production of the laminate of the first and second layers and the core material because this can be done off site at a location specifically designed for that purpose. The stepped structure can then be assembled (without requiring welding) through the use of threaded fastenings (though of course welding, if carefully controlled, can be used, if so desired).

Figure 3 shows a plurality of structural members 1 connected together to form a stepped structure 100. Neighbouring structural members 1 are preferably connected together using a plurality of threaded fastenings 110 such as (countersunk) bolts spaced along the rise portion 3 in the longitudinal direction. The threaded fastening 110 passes through the vertical portions 42 of rise portions 3 of adjacent structural members 1. Preferably those rise portions 3 are connected to each other adjacent respective second longitudinal end portions. The second longitudinal end portions are at an opposite end of the rise portion 3 to the first longitudinal end portion 41.

The rise portions which are connected together extend in opposite directions (i.e. in use one extends upwards and the other extends downwards) so that a stepped structure is formed.

A plate member 60 is provided as a support member for supporting the structural member 1 and to which the plurality of structural members 1 are attached. Threaded fastenings 70 are used to connect the plate member 60 to the structural members. As can be seen from Figure 3 a convenient location for the threaded fastenings 70 is through the plate member 60 and into the base part of the rise portion 3. Of course other methods of attaching the structural members to the plate member 60 can be used but this method avoids welding and is therefore preferred. Rockwool 130 or similar can be placed on the plate member 60 between the plate member and the structural members 1 to provide thermal and/or acoustic insulation. The plate member 60 can then be attached to raker beams (in the form of I beams) and appropriate framing can be designed to carry the whole structure. The raker beams lie in the transverse direction parallel to the plate 60 and can be longitudinally spaced as appropriate, preferably between 10 and 15 metres apart.

It is important to control the dynamic mechanical frequency of stepped risers because of the likelihood of people moving on the risers in unison. A typical target design frequency of 7.5 Hz exists for an unloaded structure which will reduce to about 6 Hz when the structure is loaded.

The present invention provides a further additional vertical support 80 for changing the mechanical dynamic performance of a stepped riser. This member can influence the dynamic mechanical frequency of the stepped riser.

Figure 3 shows the further additional vertical support 80 which extends between the plate member 60 and at least some of the structural members 1. The additional vertical support 80 extends in the longitudinal direction and is connected to the corresponding structural member 1 approximately at a position at which the run portion 1 is furthest from the plate member 60 or where it is attached to the rise portion 3. Of course the additional vertical support 80 is not actually vertical and may be off set by a few tens of degrees from the vertical position. The additional vertical support plate provides the correct dynamic performance of the structural member (for example during movement of humans on the structural member, perhaps movement in unison).

### Second Embodiment

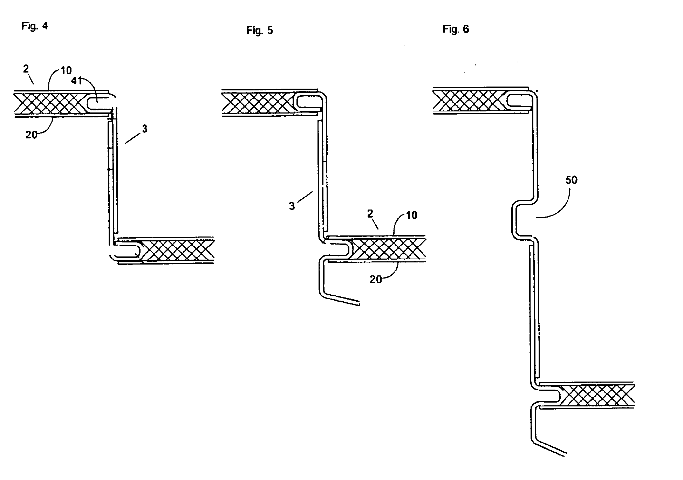

The second embodiment is the same as the first embodiment except as described below. Variations on the second embodiment are illustrated in Figures 4-6. As can be seen, a portion of the rise member 3 is bent over (for example to form a part which projects out of the general plane of the riser 3) and this bent part is inserted between the first and second layers 10, 20. This allows the rise portion 3 to be made of a metal member, for example a sheet, which is thinner than in the first embodiment. The bend may be roll formed, preferably hot roll formed.

In fact a longitudinal end of the rise portion 3 is bent back on itself through 180° to form a U shape in cross-section. That longitudinal end portion 41 is then bent through a further 90° to give the rise portion 3 an overall L shape with the base of the L being formed by the bent back first longitudinal end portion 41. It may be necessary to make a weld between the bent back end and the main vertical part of the rise portion 3 in order to prevent water or other undesirable fluids from entering the hollow cavity in the middle of the longitudinal end portion 41.

A variation of the second embodiment is illustrated in Figure 5. In this embodiment one of the risers also has a portion which is inserted between the first and second layers of the step portion 2. In the lower rise portion 3 it is a portion intermediate of the longitudinal ends of the metal member which is inserted between the first and second layers 10, 20. This is achieved by forming a longitudinal corrugation in the rise portion so that, in cross-section, the corrugation has a C shape. In other words, the rise portion 3 is bent in the longitudinal direction by 90°, then at a position lower down the rise portion it is bent again in a longitudinal direction by 90° in the opposite direction to the first bending. A further bend by 90° in the opposition direct to the first bend is made followed by a final bend in the original direction by 90°.

The portions to be inserted between the first and second layers of the step portion can be selected from both types illustrated in Figures 4 and 5 and may be mixed.

Figure 6 illustrates a further variation. The embodiment of Figure 6 is the same as that of Figure 5 except that a corrugation 50 is formed in a vertical part of the riser 3. This corrugation has a C shape in cross-section and is formed in the same way as the portion inserted between the first and second layers 10, 20 of Figure 5. The corrugation 50 helps with the stiffness of the rise portion 3. Furthermore, the lower rise portion 3 of the pair of rise portions 3 illustrated in Figure 6 can have its second end (which is opposite the first longitudinal end) abutting the underside of the corrugation 50. In this way an interlock is formed and part of the load is taken by the corrugation 50 rather than by the fastening means holding the two rise portions 3 together.

### Third Embodiment

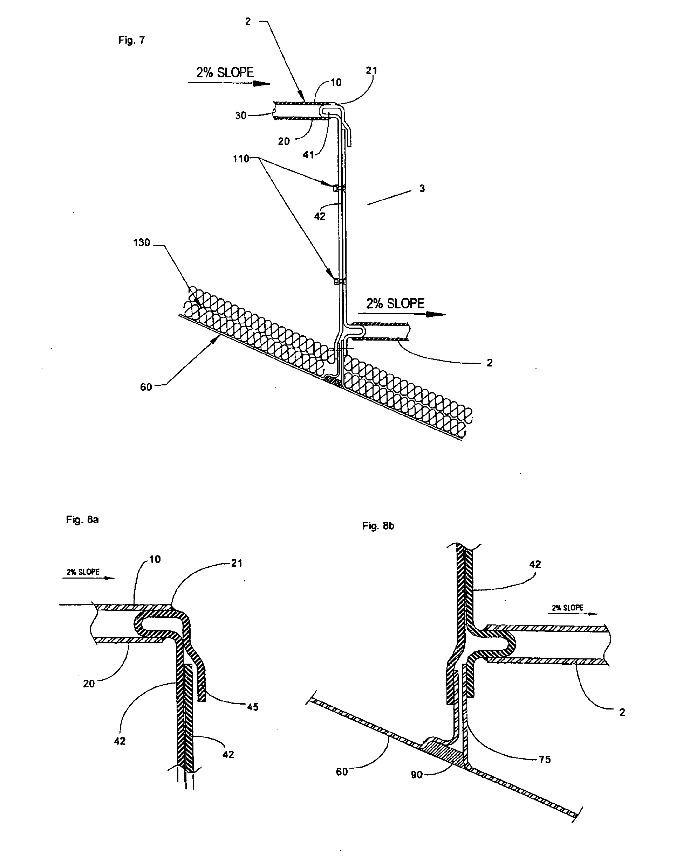

The third embodiment is the same as the second embodiment except as described below. The third embodiment is described with reference to Figure 7.

In the third embodiment a portion of the rise member 3 is bent back on itself over the top of the end of the rise member 3. This bent part is inserted between the first and second layers 10, 20. Thus, it is the inner surface of the rise portion 3 which is in contact with the inner surfaces of the first and second layers 20. As with the second embodiment, this allows the rise portion 3 to be made of a metal member, for example a sheet, which is thinner than in the first embodiment. The bend may be roll formed, perhaps cold roll formed.

The bent portion is illustrated in more detail in Figure 8a. As can be seen in Figure 8a the bend in the longitudinal end of the rise portion is such that at least a portion of the rise portion is bent through 180°. In this way part of the bend is parallel to the vertical portion 42 of the rise portion 3. As can be seen in Figure 8a a final end 45 is bent away from the vertical portion 42. This allows the top end of a different lower rise portion to lie between two parts of the top rise portion. The final end 45 is effective to prevent water, such as rain, from entering the space between the two rise portions.

As illustrated in Figure 7 the two rise portions are different and are attached to each other using bolts. Such bolts could for example be huck fastener magna-lok fasteners.

The second riser illustrated in Figure 7 is similar to the second riser of Figure 6. That is, the portion which is inserted between the first and second layers of the step portion 2 is a portion intermediate of the longitudinal ends of the rise portion.

A difference of the Figure 7 embodiment over the Figure 6 embodiment is that the rise portion which has a part between the two layers of the lower step portion is in an outer most position of the two rise portions (rather than an inner most). As a result it is possible for both rise portions to extend down to the supporting member. This is illustrated in detail in Figure 8b.

As can be seen in Figure 8b both rise portions extend down to a tab 75 of the supporting member, for example, formed by plate member 60 ends. The rise portions can be for example, through bolted onto the tab 75. As can be seen from Figure 8b, the plate member 60 is actually formed of two metal plates and the same fastener which fastens the rise portions to the tab 75 can be used to connect the two plate members 60 together.

As with the embodiment of Figure 3, insulation and/or fire proofing can be placed on the plate member 60. The insulation may be cafco board, for example with a thickness of 50mm.

As illustrated in Figure 8b a further member 90 is positioned between the two plates making up the plate member 60. This provides additional stiffness, should it be necessary.

Figures 8a and 8b show in detail the longitudinal welds between the rise and run portions used to attach the run portions to the rise portions. Similar welds can be used in the other embodiments described elsewhere.

### Materials

The sheets of metal 10, 20, and other metal parts of the structural member described above, are preferably made of structural steel, as mentioned above, though these may also be made with aluminium, stainless steel, galvanised steel or other structural alloys in applications where lightness, corrosion resistance or other specific properties are essential. The metal should preferably have a minimum yield strength of 240MPa and an elongation of at least 10%.

The plastics or polymer material should have, once cured, a modulus of elasticity, E, of at least 250MPa, preferably 275MPa, at the maximum expected temperature in the environment in which the member is to be used. In civil applications this may be as high as 100°C.

The ductility of the plastics or polymer material at the lowest operating temperature must be greater than that of the metal layers, which is about 20%. A preferred value for the ductility of the core material at lowest operating temperature is 50%. The thermal coefficient of the core material must also be sufficiently close to that of the steel so that temperature variation across the expected operating range, and during welding, does not cause delamination. The extent by which the thermal coefficients of the two materials can differ will depend in part on the elasticity of the core material but it is believed that the thermal expansion coefficient of the core material may be about 10 times that of the metal layers. The coefficient of thermal expansion may be controlled by the addition of fillers.

The bond strength between the core and metal layers must be at least 0.5, preferably 6, MPa over the entire operating range. This is preferably achieved by the inherent adhesiveness of the core material to metal but additional bond agents may be provided.

The core material is preferably a polyurethane elastomer and may essentially comprise a polyol (e.g. polyester or polyether) together with an isocyanate or a diisocyanate, a chain extender and a filler. The filler is provided, as necessary, to reduce the thermal coefficient of the intermediate layer, reduce its cost and otherwise control the physical properties of the elastomer. Further additives, e.g. to alter mechanical properties or other characteristics (e.g. adhesion and water or oil resistance), and fire retardants may also be included.

Whilst an embodiment of the invention has been described above, it should be appreciated that this is illustrative and not intended to be limitative of the scope of the invention, as defined in the appended claims. In particular, the dimensions given are intended as guides and not to be prescriptive. Also, the present invention has been exemplified by description of a seating riser but it will be appreciated that the present invention is applicable to other forms of stepped structure.

## Claims

1. A structural member (1) comprising:
a run portion (2) formed by a sandwich structure having first and second plates (10, 20) and a core (30) of a plastics or polymer material between and bonded to said first and second plates (10, 20) so as to transfer shear forces therebetween; and
a rise portion (3) formed by a metal member, said rise portion (3) being fixed to said run portion (2) and with a first portion of said metal member being inserted between said first and second plates (10, 20),
wherein said first portion has a thickness substantially equal to the separation of said plates (10, 20) such that by being inserted between said first and second plates (10, 20) said first portion spans the gap between the plates (10, 20), and
**characterized by** further comprising a further rise portion (3), said further rise portion (3) being formed by a further metal member and being fixed to said run portion (2) and with a first portion of said further metal member inserted between said first and second plates (10, 20).

2. The structural member of claim 1, wherein said first portion is formed by a part of said metal member being bent back on itself such that an outer surface of said metal member abuts both an inner surface of said first plate (10) and an inner surface of said second plate (20), or
wherein said first portion is formed by a part of said metal member being bent back on itself such that an inner surface of said metal member abuts both an inner surface of said first plate (10) and an inner surface of said second plate (20).

3. The structural member of claim 2, wherein said part is a longitudinal end.

4. The structural member of any one of the preceding claims wherein said first portion is a first longitudinal end portion (41).

5. The structural member of claim 3, wherein said part is intermediate longitudinal ends of said metal member.

6. The structural member of claim 1, wherein said first portion is a portion of said metal member bent to form a shape sized to fit between and be in contact with said first and second plates (10, 20).

7. The structural member of any one of the preceding claims, wherein said metal member is a rolled metal member and/or wherein said metal member is generally L-shaped in cross-section in a plane perpendicular to the longitudinal direction, preferably wherein said first portion comprises at least a part of the base of the L of the L-shaped cross-section.

8. The structural member of any one of the preceding claims, wherein said first portion is inserted between said first and second plates (10, 20) along a longitudinal edge of said run portion (2).

9. The structural member of any one of the preceding claims, wherein said first portions of respective rise portions (3) are inserted between said metal plates along opposite longitudinal edges (21) of said run portion (2) and/or wherein one of said rise portions (3) projects beyond a plane of an outer surface of one of said plates (10, 20) of said run portion (2) and the other of said rise portions (3) projects beyond a plane of an outer surface of the other of said plates (10, 20).

10. The structural member of any one of the preceding claims, wherein said rise portion (3) comprises at least one longitudinal corrugation.

11. A stepped structure (100) comprising a plurality of structural members (1) according to any one of the preceding claims.

12. The stepped structure (100) of claim 11, wherein rise portions (3) of adjacent structural members (1) are connected to each other adjacent respective second longitudinal end portions, said second longitudinal end portion being at an opposite end to a first longitudinal end portion, preferably wherein said connection between rise portions (3) of adjacent structural members (1) is made with a fastening member (110), preferably a threaded fastening member, preferably a bolt.

13. The stepped structure (100) of claim 11 or 12, further comprising a support member (60) for supporting said structural members, preferably further comprising at least one further member extending directly between said support member and a run portion.

14. The stepped structure (100) of claim 13, wherein said structural members (1) are fixed to said support member (60) by a threaded fastening member (70) which passes through said support member (60) and into said rise portion (3).

15. The stepped structure (100) of any one of claims 11-14, wherein the stepped structure (100) is a tiered seating structure.

## Patentansprüche

1. Strukturbauteil (1), enthaltend:
einen Laufbereich (2), der durch eine Verbundaufbaustruktur gebildet ist, die eine erste und eine zweite Platte (10, 20) aufweist, und die einen Kern (30) aus Kunststoff oder Polymermaterial aufweist, der zwischen der ersten und zweiten Platte (10, 20) liegt und mit diesen verbunden ist, um zwischen ihnen wirkende Scherkräfte zu übertragen; und
einen Steigbereich (3), der durch ein Metallbauteil gebildet ist, wobei der Steigbereich (3) an dem Laufbereich (2) fixiert ist, wobei ein erster Bereich des Metallbauteils zwischen die erste und zweite Platte (10, 20) eingefügt ist,
wobei der erste Bereich eine Dicke aufweist, die im Wesentlichen gleich der Separation der Platten (10, 20) ist, so dass der erste Bereich, wenn er zwischen die erste und zweite Platte (10, 20) eingefügt ist, den Spalt zwischen den Platten (10, 20) aufspannt, und
**gekennzeichnet durch** ferner enthaltend einen weiteren Steigbereich (3), wobei der weitere Steigbereich (3) **durch** ein weiteres Metallbauteil gebildet und an dem Laufbereich (2) fixiert ist, wobei ein erster Bereich des weiteren Metallbauteils zwischen die erste und zweite Platte (10, 20) eingefügt ist.

2. Strukturbauteil nach Anspruch 1, bei dem der erste Bereich durch einen Teil des Metallbauteils gebildet ist, das auf sich selbst derart zurückgebogen ist, dass eine äußere Fläche des Metallbauteils an einer inneren Fläche der ersten Platte (10) und an einer inneren Fläche der zweiten Platte (20) anstößt, oder
bei dem der erste Bereich durch einen Teil des Metallbauteils gebildet ist, das auf sich selbst derart zurückgebogen ist, dass eine innere Fläche des Metallbauteils an einer inneren Fläche der ersten Platte (10) und einer inneren Fläche der zweiten Platte (20) anstößt.

3. Strukturbauteil nach Anspruch 2, bei dem das Teil ein Längsende ist.

4. Strukturbauteil nach einem der vorangegangen Ansprüche, bei dem der erste Bereich ein erster Längsendbereich (41) ist.

5. Strukturbauteil nach Anspruch 3, bei dem das Teil zwischen Längsenden des Metallbauteils ist.

6. Strukturbauteil nach Anspruch 1, bei dem der erste Bereich ein Bereich des Metallbauteils ist, das gebogen ist, um eine Form zu bilden, die größenmäßig zwischen die erste und zweite Platte (10, 20) passt und diese kontaktiert.

7. Strukturbauteil nach einem der vorangegangen Ansprüche, bei dem das Metallbauteil ein gerolltes Metallbauteil ist und/oder das Metallbauteil im Querschnitt in eine Ebene senkrecht zu der Längsrichtung im Allgemeinen L-förmig ist, wobei der erste Bereich vorzugsweise mindestens ein Teil der Basis des L's des L-förmigen Querschnitts enthält.

8. Strukturbauteil nach einem der vorangegangenen Ansprüche, bei dem der erste Bereich zwischen die erste und die zweite Platte(10, 20) entlang eines Längsrands des Laufbereichs (2) eingefügt ist.

9. Strukturbauteil nach einem der vorangegangenen Ansprüche, bei dem die ersten Bereiche der jeweiligen Steigbereiche (3) zwischen die Metallplatten entlang gegenüberliegenden Längsränder (21) des Laufbereichs (2) eingefügt sind und/oder einer der Steigbereiche (3) jenseits einer Ebene einer äußeren Fläche von einer der Platten (10, 20) des Laufbereichs (2) weg steht und der andere der Steigbereiche (3) jenseits einer Ebene einer äußeren Fläche der anderen der Platten (10, 20) weg steht.

10. Strukturbauteil nach einem der vorangegangenen Ansprüche, bei dem der Steigbereich (3) mindestens eine Längsriffelung enthält.

11. Abgestufte Struktur (100) mit einer Mehrzahl von Strukturbauteilen (1) gemäß einem der vorangegangenen Ansprüche.

12. Abgestufte Struktur (100) nach Anspruch 11, bei der die Steigbereiche (3) von benachbarten Strukturbauteilen (1) miteinander benachbart zu entsprechenden zweiten Längsendbereichen verbunden sind, wobei der zweite Längsendbereich an einem dem ersten Längsendbereich gegenüberliegenden Ende ist, wobei vorzugsweise die Verbindung zwischen den Steigbereichen (3) von benachbarten Strukturbauteilen (1) durch ein Befestigungsbauteil (110) erfolgt, vorzugsweise ein Befestigungsbauteil mit Gewinde, vorzugsweise ein Bolzen.

13. Abgestufte Struktur (100) nach Anspruch 11 oder 12, ferner mit einem Trägerbauteil (60) zum Abstützen der Strukturbauteile, vorzugsweise ferner mit mindestens einem weiteren Bauteil, das sich direkt zwischen dem Trägerbauteil und einem Laufbereich erstreckt.

14. Abgestufte Struktur (100) nach Anspruch 13, bei der die Strukturbauteile (1) an dem Trägerbauteil (60) durch ein Befestigungsbauteil (70) mit Gewinde fixiert sind, das durch das Trägerbauteil (60) und in den Steigbereich (3) verläuft.

15. Abgestufte Struktur (100) nach einem der Ansprüche 11 bis 14, bei der die abgestufte Struktur (100) eine abgestufte Sitzstruktur ist.

## Revendications

1. Elément structurel (1) comprenant :
une partie giron (2) formée par une structure en sandwich comportant des première et deuxième plaques (10, 20) et une âme (30) en matière plastique ou polymère située entre et collée auxdites première et deuxième plaques (10, 20) afin de transférer des forces de cisaillement entre elles ; et
une partie hauteur (3) formée par un élément métallique, ladite partie hauteur (3) étant fixée à ladite partie giron (2) et une première partie dudit élément métallique étant insérée entre lesdites première et deuxième plaques (10, 20),
dans lequel ladite première partie a une épaisseur sensiblement égale à la séparation desdites plaques (10, 20), de sorte qu'en étant insérée entre lesdites première et deuxième plaques (10, 20), ladite première partie couvre l'espace situé entre les plaques (10, 20), et
**caractérisé en ce qu'**il comprend en outre une partie hauteur supplémentaire (3), ladite partie hauteur supplémentaire (3) étant formée par un élément métallique supplémentaire et étant fixée à ladite partie giron (2) et avec une première partie dudit élément métallique supplémentaire insérée entre lesdites première et deuxième plaques (10, 20).

2. Elément structurel selon la revendication 1, dans lequel ladite première partie est formée par une portion dudit élément métallique qui est recourbée sur elle-même de telle manière qu'une surface extérieure dudit élément métallique est en appui à la fois contre une surface intérieure de ladite première plaque (10) et contre une surface intérieure de ladite deuxième plaque (20), ou
dans lequel ladite première partie est formée par une portion dudit élément métallique qui est recourbée sur elle-même de telle manière qu'une surface intérieure dudit élément métallique est en appui à la fois contre une surface intérieure de ladite première plaque (10) et contre une surface intérieure de ladite deuxième plaque (20).

3. Elément structurel selon la revendication 2, dans lequel ladite portion est une extrémité longitudinale.

4. Elément structurel selon l'une quelconque des revendications précédentes, dans lequel ladite première partie est une première partie d'extrémité longitudinale (41).

5. Elément structurel selon la revendication 3, dans lequel ladite portion se trouve entre les extrémités longitudinales dudit élément métallique.

6. Elément structurel selon la revendication 1, dans lequel ladite première partie est une partie dudit élément métallique courbée pour former une forme dimensionnée pour se loger entre et être en contact avec lesdites première et deuxième plaques (10, 20).

7. Elément structurel selon l'une quelconque des revendications précédentes, dans lequel ledit élément métallique est un élément métallique laminé et/ou dans lequel ledit élément métallique est de section généralement en forme de L dans un plan perpendiculaire à la direction longitudinale, de préférence dans lequel ladite première partie comprend au moins une portion de la base du L de la section transversale en L.

8. Elément structurel selon l'une quelconque des revendications précédentes, dans lequel ladite première partie est insérée entre lesdites première et deuxième plaques (10, 20) le long d'un bord longitudinal de ladite partie giron (2).

9. Elément structurel selon l'une quelconque des revendications précédentes, dans lequel lesdites premières parties de parties hauteurs (3) respectives sont insérées entre lesdites plaques métalliques le long de bords longitudinaux opposés (21) de ladite partie giron (2) et/ou dans lequel l'une desdites parties hauteurs (3) fait saillie au-delà d'un plan d'une surface extérieure de l'une desdites plaques (10, 20) de ladite partie giron (2) et l'autre desdites parties hauteurs (3) fait saillie au-delà d'un plan d'une surface extérieure de l'autre desdites plaques (10, 20).

10. Elément structurel selon l'une quelconque des revendications précédentes, dans lequel ladite partie hauteur (3) comprend au moins une ondulation longitudinale.

11. Structure en escalier (100) comprenant une pluralité d'éléments structurels (1) selon l'une quelconque des revendications précédentes.

12. Structure en escalier (100) selon la revendication 11, dans laquelle les parties hauteurs (3) d'éléments structurels (1) adjacents sont connectées les unes aux autres au voisinage de deuxièmes parties d'extrémités longitudinales respectives, ladite deuxième partie d'extrémité longitudinale étant à une extrémité opposée à une première partie d'extrémité longitudinale, de préférence dans laquelle ladite connexion entre les parties hauteurs (3) d'éléments structurels (1) adjacents est faite avec un élément de fixation (110), de préférence un élément de fixation fileté, de préférence un boulon.

13. Structure en escalier (100) selon la revendication 11 ou 12, comprenant en outre un élément de support (60) pour supporter lesdits éléments structurels, de préférence comprenant en outre au moins un élément supplémentaire s'étendant directement entre ledit élément de support et une partie giron.

14. Structure en escalier (100) selon la revendication 13, dans laquelle lesdits éléments structurels (1) sont fixés audit élément de support (60) par un élément de fixation fileté (70) qui passe à travers ledit élément de support (60) et dans ladite partie hauteur (3).

15. Structure en escalier (100) selon l'une quelconque des revendications 11 à 14, dans laquelle la structure en escalier (100) est une structure d'assise en gradin.
